# EUROPEAN PATENT SPECIFICATION

(11) **EP 1 109 413 B1**
(45) Date of publication and mention of the grant of the patent: **21.05.2008**
(21) Application number: 00309565.0
(22) Date of filing: 30.10.2000
(51) Int. Cl.: H04Q 3/00, H04L 12/24

(54) **Summary building block, system and method for network management**
Summarische Bausteine, System und Verfahren zur Netzwerksverwaltung
Produits de la fonction de données sommaires, système et méthode pour la gestion de réseaux

(30) Priority: 16.12.1999 US 464473
(43) Date of publication of application: 20.06.2001
(73) Proprietor: Nortel Networks Limited, St Laurent, Québec H4S 2A9 (CA)
(72) Inventor: Shafii, Reza, Ottawa, Ontario, K2P 2N1 (CA); Hyndman, Arn C., Ottawa, Ontario, K2P 0N7 (CA)
(74) Representative: Mackenzie, Andrew Bryan

(56) References cited:
- EP-A- 0 873 028
- EP-A- 0 963 077
- US-A- 5 761 429

## Description

This invention relates to a method and system for managing networks, and more particularly, to a method and system for managing networks using summary building block.

### BACKGROUND OF THE INVENTION

Existing network management systems typically fall into one of two designs. These are: 1) network management systems using a central database for information storage and 2) network management systems using live data cached in memory and managed by a server process. Both existing approaches suffer from scalability problems.

In the first approach, as the number of network elements to be managed increases, the rate at which data must be stored into the central database also increases. Equally, as the number of users increases, the rate at which data must be retrieved from the central database also increases. Current art in database technology is very good at providing access to relatively static data, but is not as effective at handling rapid access to the rapidly changing data that is characteristic of network management. In these scenarios, current databases quickly reach their maximum transaction rate, often limiting the effect size of network that can be managed to 10,000 network elements.

In the second approach, the rate at which data is stored is less important than the amount of data that must be cached in server memory. The amount of data to be cached is directly proportional to the number of network elements to be managed. Typical workstations that host such servers hit memory limitations at around 10,000 network elements.

The user interfaces employed by network management systems may also suffer from scalability problems. In some systems the user interface displays only detailed information about the network selected by a filter. The user interface in these systems may not impose additional scalability limitations. However, in other systems, which are considered superior, the user interface provides summary information and detailed information on request. Systems that provide summary information typically load all of the status information about the network into the user interface in order to calculate the summary data. Similar to the second approach discussed above, this approach requires large amounts of data to be cached in the user interface and results in the user interface hitting memory limitations at around 10,000 network elements.

European Patent application EP 0963077 describes a layered architecture for a network management system with physical building blocks and service building blocks. The physical building blocks convert the physical network information from the network resources and faults information into specific physical network data. The service building blocks then convert the physical network data from the physical building blocks and present to the clients. However, this approach still uses a service building block to physical building block mapping for managing a network. There is no summary information created which would summarize the physical network information and reduce the memory requirement as discussed above. Therefore, the memory limitation may be reached easily.

It is therefore desirable to provide a network management system which has superior summary display capabilities, while overcoming both the user interface and server scalability limitations discussed above.

### SUMMARY OF THE INVENTION

According to one aspect of the present invention there is provided a summary building block as recited in Claim 1.

The summary building block collects data from the services, and provides network level summary information to user interfaces based on the data collected from the services. In accordance with an aspect of the present invention, there is provided a summary building block for use in a network management system for managing a network having multiple network elements. The network management system has one or more user interfaces for communication with one or more users. The summary building block comprises a back end interface and a front end interface. The back end interface is provided for collecting data from the network elements. The back end interface calculates the network level summary information based on the data collected from the network elements. The front end interface is provided for providing network level summary information to the user interfaces based on the data collected by the back end interface. The front end interface provides to each user interface the network level summary information that the user interface has access.

Preferably, the back end interface has a plugin mechanism using dynamically loaded shared libraries for loading and running plugin modules for obtaining the network level summary information.

In accordance with another aspect of the present invention there is provided a network management system as recited in Claim 8.

Preferably, the summary building block is part of a network management system.

In accordance with a further aspect of the invention, there is provided a method for managing network having multiple network elements as recited in Claim 16. The method comprises the steps of providing a summary building block between a user interface and the network elements; collecting data from the network elements; calculating a network level summary information based on the data collected from the network elements, and providing to the user interfaces the network level summary information.

Other aspects and features of the present invention will be readily apparent to those skilled in the art from a review of the following detailed description of preferred embodiments in conjunction with the accompanying drawings.

### BRIEF DESCRIPTION OF THE DRAWINGS

The invention will be further understood from the following description with reference to the drawings in which:
Figure 1 is a diagram showing an embodiment of the network management system in accordance with the present invention;
Figure 1A is a diagram showing another embodiment of the network management system in accordance with the present invention;
Figure 2 is a diagram showing an example of the components of the summary building block shown in Figure 1;
Figure 3 is a diagram showing relationship between a layout and a view;
Figure 4 is a diagram showing views for multiple GUIs;
Figure 5 is a diagram showing an example of a network information table;
Figure 6 is a diagram showing another embodiment of the network management system in accordance with the present invention;
Figure 7 is a diagram showing an example of a plugin interface;
Figure 8 is a diagram showing an example of updating of view information;
Figure 9 is a diagram showing another example of updating of view information; and
Figure 10 is a diagram showing an example of implementation of the network management system shown in Figure 6.

### DETAILED DESCRIPTION OF THE PREFERRED EMBODIMENTS

The present invention is applicable to various types of service management systems that manage services. Especially, it is suitably used in network management systems managing network elements. The present invention is described hereinafter using network management as an example of service management. However, the application of the invention is not limited to network management, and it may also be used for management of other type of services.

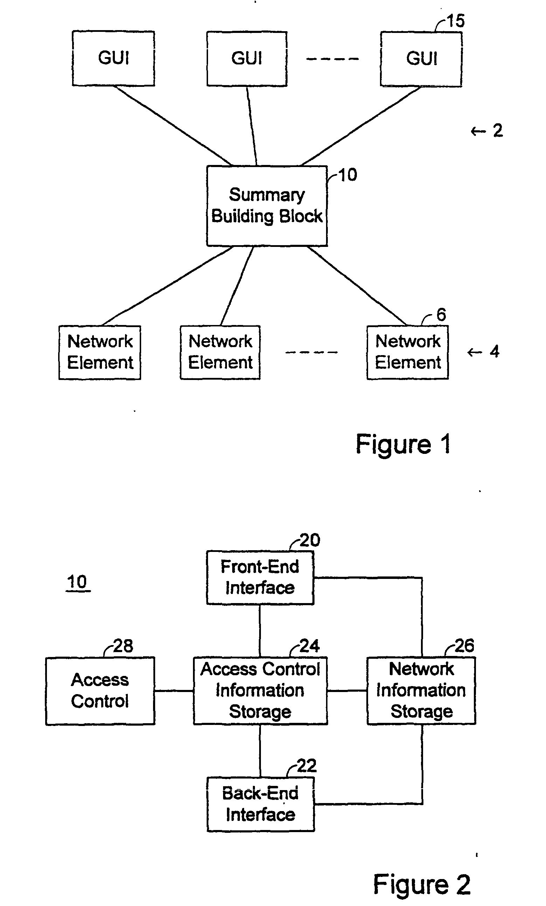

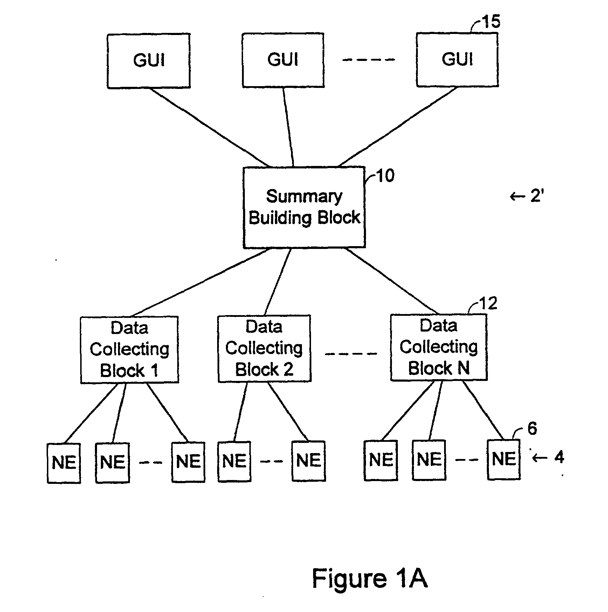

Referring to Figure 1, an embodiment of a network management system in accordance with the present invention is described. The network management system 2 is provided for managing a network 4.

The network 4 contains multiple network elements 6. Network elements 6 are resources in the network that process, route and switch network traffic. The number of network elements 6 in the network 4 is typically large. It may be more than 10,000.

The network management system 2 comprises a summary building block 10 and one or more user interfaces, such as Graphical User Interfaces (GUIs) 15.

The summary building block 10 is provided to communicate with both GUIs 15 and network elements 6. The summary building block 10 collects data from each network element 6, and provides summary information to GUIs 15 based on the data collected from the network elements 6.

The summary information is information summarised at the network level, and generally the information which would be displayed within a main network management window. It does not include all details of each network element 6. It is relatively small in size, compared to the complete information including all details. Thus, the summary building block 10 may handle information from a larger number of network elements 6, compared to existing network managing systems.

The summary information also has the property that it represents a snapshot of the state of the network element 6. It is, therefore, possible for the summary building block 10 to drop summary events that have queued up waiting to be sent to their relevant GUIs 15 in favour of the latest event. This can dramatically reduce the amount of data flow between the summary building block 10 and GUIs 15, resulting in increase in the number of network elements 6 that can be managed. It is not possible to drop events when detailed information is sent, as in conventional network managing systems.

The data collected from the network elements 6 may be detailed data, or network element level summary data. The network element level summary data is the data summarized in each network element level. When the summary building block 10 collects network element level summary data, the amount of data flow between the network elements 6 and the summary building block 10 can be also reduced, resulting further increase in the number of network elements 6 that can be managed.

When data collected from network elements is network element level summary data, the summary building block 10 may simply pass the collected element level summary information onto relevant GUIs 15. However, the summary building block 10 typically calculates network level summary information based on detailed data and/or network element level summary data collected from the network elements 6. Thus, each GUI 15 does not need to calculate the network level summary information from its received data. Each GUI does not even need to receive enough data to perform those calculations.

Figure 1A shows another embodiment of the network management system 2' in accordance with the present invention. This embodiment is similar to that shown in Figure 1, other than that the summary building block 10 shown in Figure 1A communicates with the network elements 6 indirectly.

In this embodiment, the network elements 6 are partitioned into groups. A data collecting block 12 is provided for each group of network elements 6. The summary building block 10 collects data from the network elements 6 through the data collecting blocks 12.

In this embodiment, the summary building block 10 stores knowledge of which network elements 6 belong to what group. Thus, when a user views a group at a GUI 15, the detail data of the network element 6 that belong to the group can be loaded on demand at the GUI 15.

Figure 2 shows an example of the summary building block 10. In this example, the summary building block 10 comprises a front end interface 20, a back end interface 22, an access control information storage 24, a network information storage 26 and an access control component 28.

The back end interface 22 interfaces communication with the network elements 6 directly as shown in Figure 1, or through data collecting blocks 12 as shown in Figure 1A. Using the back end interface 22, the summary building block 10 collects data from the network elements 6, as further described below.

The front end interface 20 interfaces communication with the GUIs 15. Through the front end interface 20, the summary building block 10 provides to the GUIs 15 network level summary information based on the data collected by the back end interface 22, as further described below.

The summary building block 10 preferably stores the resource level summary information in the network information storage 26. The resource level summary information may be stored in the form of a network information table.

The summary building block 10 may store the resource level summary information on a per network element basis, i.e., on a per network object basis. Each network object has a unique identifier, i.e., an object ID.

It is preferable that the summary building block 10 stores the summary information for all object IDs in the network 4 of which the summary building block 10 has knowledge.

The network 4 typically contains a large number of network elements 6. Each client GUI 15 generally manages particular types of information of particular group of network elements 6 at any given time. It does not need all information of all network elements 6. Accordingly, it is preferable that the summary building block 10 provides to a GUI 15 the summary information of the network elements 6 as needed by the GUI 15. Thus, each GUI 15 does not need to store all of the summary information from all network elements 6 in the network. This reduces the load on each GUI 15.

As part of providing GUIs 15 with only the summary information needed, the summary building block 10 uses the access control component 28. Access control component 28 is responsible for allowing or denying users from seeing particular network elements or particular portions of data from network elements. Putting the access control component 28 in the summary building block 10 reduces the amount of data to be sent to each GUI 15.

In addition to access control reductions, each GUI 15 is typically only displaying a subset of the allowed network elements 6. Thus, the summary building block only sends to each GUI 15 the summary information for the network elements currently displayed.

The access control information for each user may be stored in the access control information storage 24.

In controlling access of each user to particular network elements or particular portions of data from network elements, the summary building block 10 may use layouts and views of network elements 6.

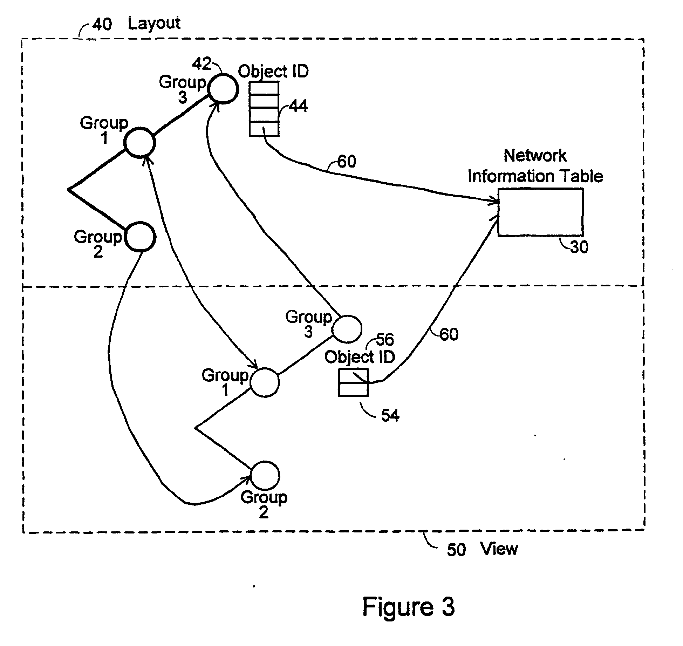

Figure 3 shows an example illustrating relation between a layout 40 and a view 50 when the view 50 is provided on its corresponding layout 40.

The layout 40 is a particular hierarchical grouping of the network elements. Each node 42 of the layout 40 represents a group of network elements.

The view 50 is created for a particular set of access control permissions, and is a hierarchical grouping of network elements based on the corresponding layout 40. The view 50 uses the same basic structure as the layout 40, but removes those network elements and portions of data from network elements that are not permitted by the access control component 28 for a particular user.

Each node 52 of the view 50 contains group summary information 54. The group summary information 54 is calculated by the summary building block 10 based on the data from network elements presented by the view 50. The group summary information is network level summary information which is considered to be of high value to users.

When a view 50 is created for a particular client, the access control component 28 is used to filter the object IDs in the corresponding layout 40 for the particular client. The summary building block 10 copies into the view 50 from the layout 40 only the object IDs for which the client has permission to access.

Using the view information, the summary building block 10 distributes the network and resource level summary information to the GUIs 15 as needed. When the summary building block 10 receives data from-a network element having an object ID for which summary information is currently being viewed by a GUI 15, the summary building block 10 provides to that GUI 15 summary information involving the object ID.

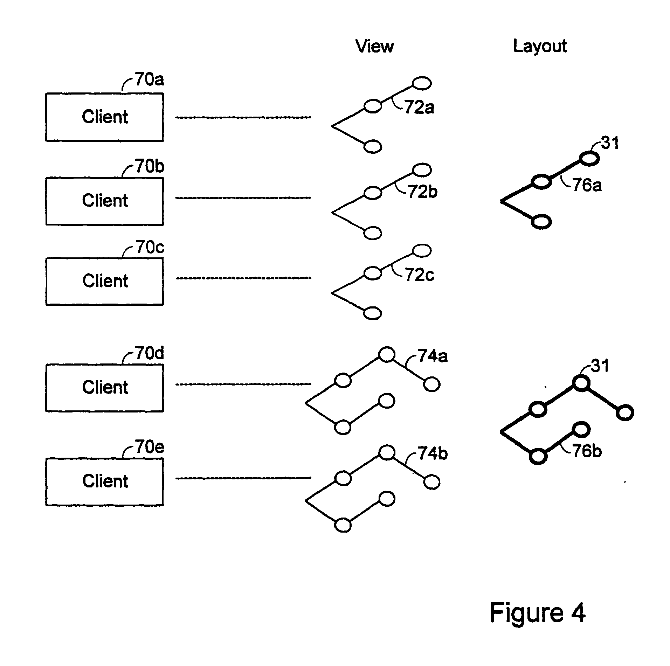

Figure 4 shows an example of the overall relationship in a network 4 between clients 70a-70d, views 72a-72c and 74a-74b, and layouts 76a,76b. Clients 70a-70c respectively have views 72a-72c which are based on the common layout 76a. Clients 70d,70e respectively have views 74a,74b which are based on the common layout 76b.

There is typically a one to one relationship between clients and views, while there may be a one to many relationship between layouts and views. However, views may be shared between users with identical access control to reduce load in the summary building block 10.

Referring back to Figure 3, the summary building block 10 may use pointers 60 with the group summary information 54. Each pointer 60 points its corresponding data collected from the relevant network elements in the network information table 30 stored in the network information storage 26.

The use of pointers 60 allows centralization of the data in the network information table 30. Also, it eliminates duplication of storing data collected for an object ID in more than one node 52 of the view 50 having the same object ID. Thus, the necessary storage capacity of the network information storage 26 may be minimized.

The summary building block 10 uses pointer arrays in the group layout and group summary information to reduce duplicated network element data.

The network elements 6 in the network 4 may be partitioned in a plurality of domains. In that case, each object ID represents a particular network element of a particular domain. The summary building block 10 may also have a domain table for storing particulars of each domain.

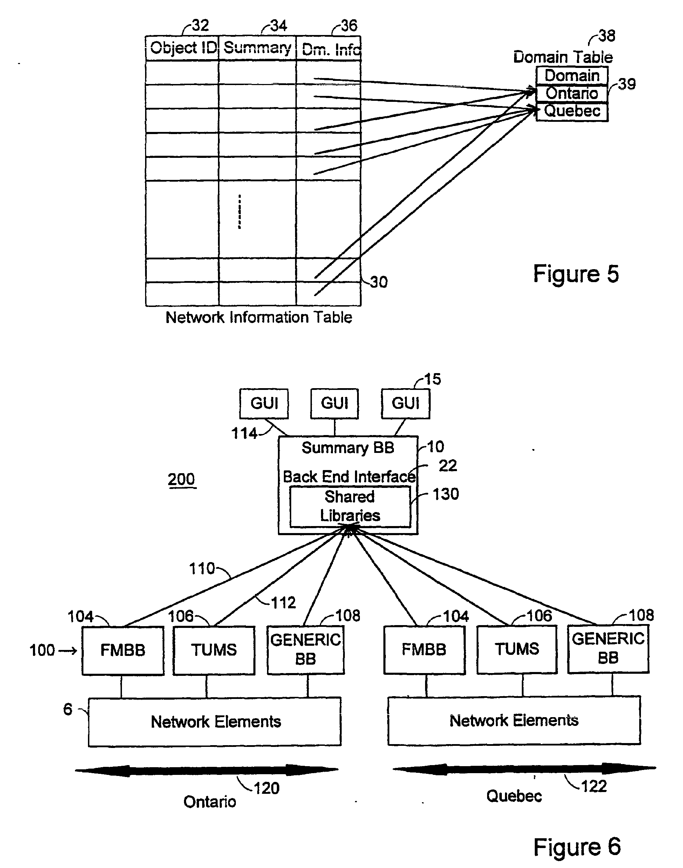

Figure 5 shows an example of a network information table 30 for storing the network level summary information 34 for a network 4. In the network information table 30, the summary information 34 is stored for each object ID 32 with a domain pointer 36. The domain pointer 36 points domain particulars 39 stored in a domain table 38. Thus, duplicated domain data is reduced by using pointers 36.

When the summary building block 10 provides to a GUI 15 summary information based on data from a network element having an object ID, it may send the domain 39 of the object ID together with the summary information 34. The GUI 15 may determine the location of the network element having the object ID in the network, using the domain 39. Thus, when a GUI 15 needs detailed information for a particular network element, the GUI 15 can communicate with the relevant network element 6 or data collecting block 12 (Figure 1A) to which the network element 6 having the object ID belongs.

Figure 6 shows another embodiment of a network management system 200. The network management system 200 comprises a summary building block 10, GUIs 15 and data collecting blocks 100.

The summary building block 10 and GUIs 15 are similar to those shown in Figure 1.

Each data collecting block 100 is connected to one or more network elements 6, and collects a particular type of data from the connected network elements 6.

Examples of data collecting blocks 100 include a Performance Management Building Block (PMBB), Fault Management Building Block (FMBB) 104, Topology Universal Modelling Service (TUMS) block 106, and generic data collecting block 108. The PMBB collects performance monitoring related data. The FMBB 104 collects fault data. The TUMS block 106 collects topology data. The generic data collecting block 108 represents any other type of data collecting block.

The summary building block 10 collects network level summary data from underlying data collecting blocks 100. For example, the summary building block 10 collects, as network element level summary data, alarm count data 110 from the FMBBs 104, and enroll/de-enroll data 112 from the TUMSs 106. Then, it calculates network level summary information 114 based on the collected data 110, 112.

In the embodiment shown in Figure 6, the network elements 6 are partitioned into two domains, e.g., "Ontario" 120 and "Quebec" 122. The network elements 6 may be partitioned into more than two domains. Figure 6 shows that the same data collecting blocks 100 are provided in each domains 120, 122. Different data collecting blocks may be provided in each domain.

When the network elements 6 are partitioned into domains, it is preferable that the summary building block 10 provides network level summary information 114 to GUIs 15 together with information regarding the domain from which the network element level summary data 110, 112 is received. To this end, the network level summary information 114 is preferably stored in the network information table 130 together with the domain information. The domain information acts as the "forwarding address" for a GUI 15 to find the correct network element 6 or data collecting block 100 when the GUI 15 needs detailed information, as described above referring to Figure 5.

The summary building block 10 preferably has a plugin mechanism for data collection and summary calculation code so that it is not bound to summarizing a fixed set of information. This plugin mechanism may consist of dynamically loaded shared libraries 130, as shown in Figure 6.

The summary building block 10 generally does not know in advance from which data collecting block 100 it will be collecting data. By using plugins, the summary building block 10 can dynamically load code to collect data from the required set of data collecting blocks 100.

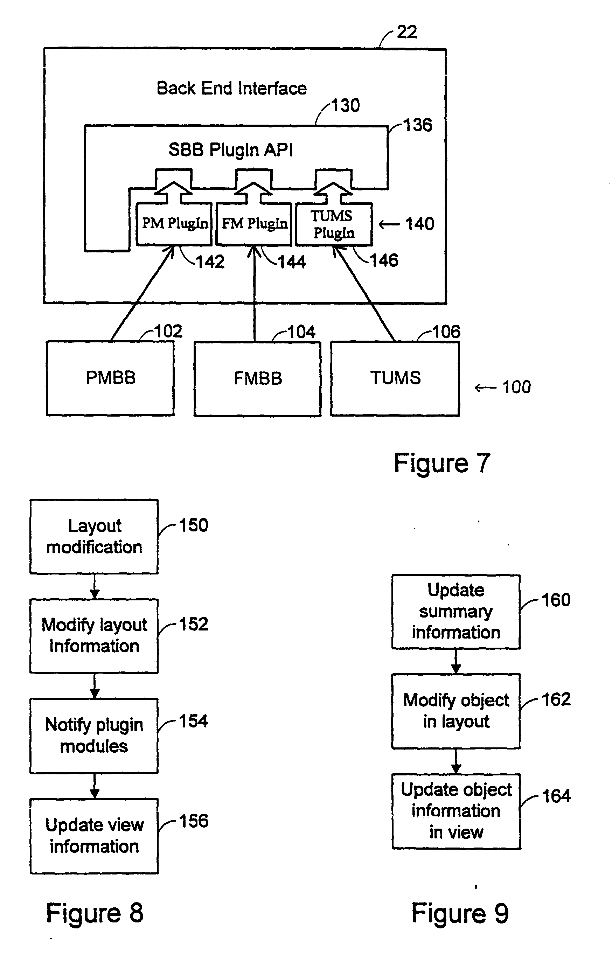

Figure 7 shows an example of details of the back end interface 22 of the summary building block 10. The back end interface 22 has a Summary Building Block Plugin Application Programming Interface (SBB Plugin API) 136 and data collecting plugin modules 140.

For each kind of data collecting block 100, a plugin module 140 is provided. In this example, a PM Plugin 142 is provided for the PMBB 102, a FM Plugin 144 is provided for the FMBB 104, and a TUMS Plugin 146 is provided for the TUMS 106.

A plugin module 140 for each data collecting block 100 consists of shared libraries 130 which contain the functional components necessary to support the data collecting block 100. The plugin modules 140 preferably store all functional components necessary to support any known type of data collecting blocks 100.

When a new type of data collecting block 100 is introduced in the network management system, a new plugin module 140 can be added dynamically at run-time to the back end interface 22 of the summary building block 10 in order to support the new data collecting block 100. The new plugin module 140 conforms to the SBB Plugin API 136.

Thus, the SBB Plugin API 136 allows the behaviour of the summary building block 10 to be modified at run-time, by dynamically loading and running plugin modules 140.

The SBB Plugin API 136 collects network element level summary data from its corresponding data collecting block 100 through the corresponding plugin module 140. The exact format of network element level summary data typically depends on data collecting blocks 100. Accordingly, it is preferable that each plugin module 140 collects its network element level summary data, and translates it into a generic data format of the summary building block 10. By using the generic data format, the network level summary information may be stored in the network information storage table 26 and used by the summary building block 10 efficiently.

The plugin modules 140 may also summarize the data collected from the corresponding data collecting blocks 100.

The plugin modules 140 preferably update the view information stored in the summary building block 10. The plugin modules 140 preferably monitor modifications to layouts made by GUIs. The modifications to layouts include creating, moving, or deleting of groups of network elements.

Figure 8 shows a flowchart of updating of view information when a layout is modified by a network administrator (150). The plugin modules 140 update the layout information in the network information storage 26 (152), notify the plugin modules 140 of the modification of the layout (154), and update the view information (156).

The summary building block 10 also updates the network level summary information in the network information table 30 when the state of the network elements changes. When the network level summary information in the network information table 30 changes, the summary building block 10 calls the plugin module 140 that changed the data and updates the view information.

Figure 9 shows an example of updating of object information in a view. The summary building block 10 updates the network level summary information in the network information table 30 (160), modifies object information in the layout in which the network level summary information changed (162), and updates object information in the view in which the network level summary information changed (164).

Referring back to Figure 7, typically the summary building block 10 performs calculations to abstract the collected resource level data into network level summary information. The SBB Plugin API 136 provides a mechanism for the plugin modules 140 to get access to the resource level data stored in the network information table. Then each plugin module 140 carries out the calculation and passes the resulting network level summary information back through the SBB Plugin API 136.

The front end interface 20 provides GUIs 15 with an interface to manage layouts, e.g., to create, copy, delete, rename, get, open, close and modify a layout. It also provides an interface to send layout and summary change events, and notify the GUIs 15 changes in the network, layout and view information. It may notify changes of a layout to GUIs 15 which are currently viewing a group of network elements affected by the changes. It may notify the changes by broadcasting to all clients viewing the layout.

The front end interface 20 may also provide an interface to find a resource in the network.

The summary building block 10 may suitably use a Common Object Request Broker Architecture (CORBA) representation of the network level summary information. Such representation is generic enough that it can stand for the data retrieved from any plugin module. The front end interface 20 may be a CORBA interface.

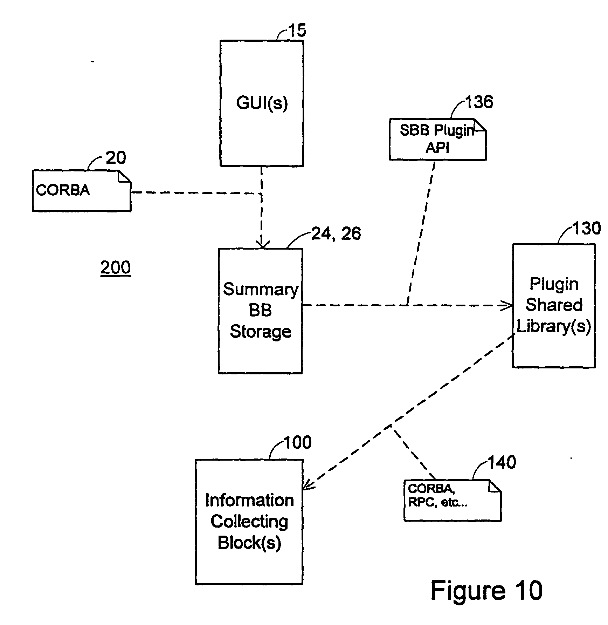

Figure 10 shows an example of the runtime implementation of the network management system 200 based on the summary building block 10. When a GUI 15 is implemented in the system 200, it communicates with the storage 24, 26 of the summary building block 10 through the front end interface 20. The front end interface 20 may suitably use CORBA. Based on the access control information in the access control information storage 24, the summary building block 10 uses plugins, consisting of shared libraries 130 to obtain relevant executable components. The plugin modules 140 communicate with the data collecting block(s) 100. The plugin modules 140 may use CORBA, Remote Procedure Call (RPC) or other formats to communicate with the data collecting blocks 100.

The above embodiments of the summary building block may handle 250 or more simultaneous client GUIs 15 and provide management for 100,000 or more network elements.

The summary building block 10 may be replicated as needed to handle more clients. Also, any building block may be replicated to provide redundancy, which increases reliability of the system, and load sharing which increases the number of users. In the other words, the summary building block, FMBB, RMBB, PMBB and other building blocks may be replicated as needed.

When a client wants to have full details of a network element, the GUI 15 may access the network element 6 directly. When the summary building block 10 uses data collecting blocks 100, the GUI 15 may access the corresponding data collecting blocks 100 from which the resource level summary information of the network object is received. The GUI 15 may use domain information 36 to access the correct network element 6 or data collecting block 100.

Some or all of the above described components of the present invention may be implemented by any suitable hardware or software that performs the functions described above.

While particular embodiments of the present invention have been shown and described, changes and modifications may be made to such embodiments without departing from the true scope of the invention. For example, in the above embodiments, the plugin modules 140 are a part of the summary building block 10. However, it may be a separate component from the summary building block 10 and communicate using RPC.

## Claims

1. A summary building block (10) for use in a network management system (2) for managing a network (4) having multiple network elements (6), the network management system having one or more user interfaces (15) for communication with one or more users, the summary building block comprising: a back end interface (22) for collecting data (110, 112) from the network elements; and a front end interface (20) for providing network level summary information (114) to the user interfaces based on the data collected by the back end interface;
**characterized in that**:
the summary building block stores layout information (40), the layout information being a hierarchical organization of the network elements; and view information (50) for each user, the view information indicating network elements and portions of the data collected from the network elements to which each user has permission to access on its corresponding layout in the layout information;
the back end interface summarizes the network level summary information based on the data collected from the network elements and the view information, and
the front end interface provides to each user interface the summarized network level summary information that the user interface has the permission to access.

2. The summary building block as claimed in claim 1, wherein the back end interface has a plugin mechanism using dynamically loaded shared libraries (130) for loading and running plugin modules (140) for obtaining the network level summary information.

3. The summary building block as claimed in claim 2, wherein the view information is updated by the plugin modules upon modification of the layout information.

4. The summary building block as claimed in claim 1 further comprising an access control component (28) for controlling each user's access to the network level summary information, wherein the front end interface provides the network level summary information to each user interface based on the access control component.

5. The summary building block as claimed in claim 1 further comprising a network information storage (26) for storing the resource level summary information collected by the back end interface.

6. The summary building block as claimed in claim 5, wherein the summary building block stores the resource level summary information on a per network element basis.

7. The summary building block as claimed in claim 6 wherein the summary building block stores the data collected from the network elements in the network information storage, and uses a pointer (60) from the view information indicating network elements and portions of the data collected from the network elements to which each user has permission to access, the pointer points to its relevant data stored in the network information storage.

8. A network management system (2) for managing a network (4) having multiple network elements (6), the network management system comprising:
one or more user interfaces (15) for communication with users;
a summary building block (10) provided between the user interfaces and the network elements for collecting data (110, 112) from the network elements, and providing network level summary information (114) to the user interfaces;
**characterized in that**
the summary building block comprises a back end interface (22) storing layout information (40), the layout information being a hierarchical organization of the network elements; and view information (50) for each user, the view information indicating network elements and portions of the data collected from the network elements to which each of the user interfaces has permission to access on its corresponding layout in the layout information; and summarizing the network level summary information based on the data collected from the network elements; and a front end interface (20) providing to each user interface the summarized network level summary information that the user interface has access.

9. The network management system as claimed in claim 8 further comprising one or more data collecting blocks (12) for collecting specific types of data from the network elements, and the summary building block collects the specific types of data from the data collecting blocks.

10. The network management system as claimed in claim 9, wherein the summary building block has a plugin module (140) for communicating with the data collecting block.

11. The network management system as claimed in claim 10, wherein the plugin module calculates the network level summary information based on the data collected from the data collecting block.

12. The network management system as claimed in claim 8 further comprising a plurality of data collecting blocks (12), each data collecting block for collecting data from a group of network elements; and wherein the summary building block has shared libraries comprising multiple plugin modules (140), each plugin module for communicating with its corresponding type of data collecting block (100).

13. The network management system as claimed in claim 12, wherein the summary building block has an application programming interface (136) for obtaining the network level summary information from the plugin modules.

14. The network management system as claimed in claim 12, wherein the summary building block has a network information storage (26) for storing the data collected from the network elements and view (50) information indicating network elements and portions of the data collected from the network elements to which each user has permission to access, using a pointer (26) pointing to its relevant data stored in the network information storage.

15. The network management system as claimed in claim 8, wherein the network elements are divided into domains (120), and the summary building block stores the network level summary information with information regarding the domains.

16. A method for managing network (4) having multiple network elements (6), the method comprising:
providing a summary building block (10) between a user interface (15) and the network elements;
collecting data from the network elements;
**characterized by**
summarizing a network level summary information (114) based on the data (110, 112) collected from the network elements based on view information (50) for the user interface, the view information indicating network elements and portions of the data collected from the network elements to which the user interface has permission to access on its corresponding layout information, the layout information being a hierarchical organization of the network elements; and
providing to the user interface the summarized network level summary information.

17. The method as claimed in claim 16, wherein a subset of the network level summary information for which the user has access is provided to the user interface.

18. The method as claimed in claim 16 further comprising the step of storing access control information for the user interface in an access control information storage (24).

19. The method as claimed in claim 16 further comprising the step of storing the network level summary information collected from the network elements.

20. The method as claimed in claim 19, wherein the storing the network level summary information is stored on a per network element basis.

21. The method as claimed in claim 16 further comprising the steps of storing the data collected from the network elements in the network information storage (26), and providing a pointer (60) from the view (50) information pointing to relevant data stored in the network information storage.

22. The method as claimed in claim 16 further comprising the step of collecting a specific type of data from the network elements by a data collecting block (100).

23. The method as claimed in claim 22 further comprising the step of providing a plugin module (140) for communicating with the data collecting block.

24. The method as claimed in claim 23 further comprising the step of calculating the network level summary information based on the data collected from the data collecting block.

25. The method as claimed in claim 24 further comprising the step of providing multiple plugin modules, each plugin module for communicating with its corresponding data collecting block.

26. The method as claimed in claim 25 further comprising the step of obtaining the network level summary information from the multiple plugin modules.

27. The method as claimed in claim 16 further comprising the step of dividing the network elements into domains (120), and storing the network level summary information with information regarding the domains.

## Patentansprüche

1. Übersichts-Baublock (10) zur Verwendung in einem Netzwerk-Management -System (2) zum Verwalten eines Netzwerkes (4), das eine Vielzahl von Netzwerk-Elementen (6) aufweist, wobei das Netzwerk-Management-System ein oder mehrere Benutzer-Schnittstellen (15) zur Kommunikation mit einem oder mehreren Benutzern hat, wobei der Übersichts-Baublock Folgendes umfasst: eine Back-End-Schnittstelle (22) zum Sammeln von Daten (110, 112) von dem Netzwerk-Elementen; und eine Front-End-Schnittstelle (20) zur Lieferung von Übersichts-Information (114) auf der Netzwerk-Ebene an Benutzer-Schnittstellen auf der Grundlage der Daten, die von der Back-End-Schnittstelle gesammelt wurden;
**dadurch gekennzeichnet, dass**:
der Übersichts-Baublock Konfigurations-Information (40), wobei die Konfigurations-Information eine hierarchische Organisation der Netzwerk-Elemente ist; und Ansichts-Information (50) für jeden Benutzer speichert, wobei die Ansichts-Information Netzwerk-Elemente und Teile der Daten anzeigt, die von den Netzwerk-Elementen gesammelt wurden, für die jeder Benutzer die Berechtigung für einen Zugriff auf ihre entsprechende Konfiguration in der Konfigurations-Information hat;
wobei die Back-End-Schnittstelle eine Übersicht über die Übersichts-Information auf der Netzwerk-Ebene auf der Grundlage der von den Netzwerk-Elementen gesammelten Daten und der Ansicht-Information liefert; und
die Front-End-Schnittstelle an jede Benutzer-Schnittstelle die zusammengefasste Übersichts-Information auf der Netzwerk-Ebene liefert, für die die Benutzer-Schnittstelle eine Berechtigung für den Zugriff hat.

2. Übersichts-Baublock nach Anspruch 1, bei dem die Back-End-Schnittstelle einen Plugin- (Software-Modul-Einfügungs-) Mechanismus aufweist, der dynamisch geladene gemeinsam genutzte Bibliotheken (130) zum Laden und Ausführen von Plugin-Modulen (140) zum Gewinnen der Übersichts-Information auf der Netzwerk-Ebene verwendet.

3. Übersichts-Baublock nach Anspruch 2, bei dem die Ansichts-Information durch die Plugin-Module bei einer Modifikation der Konfigurations-Information aktualisiert wird.

4. Übersichts-Baublock nach Anspruch 1, der weiterhin eine Zugriffs-Kontroll-Komponente (28) zur Steuerung des Zugriffs jedes Benutzers auf die Übersichts-Information auf der Netzwerk-Ebene umfasst, wobei die Front-End-Schnittstelle die Übersichts-Information auf der Netzwerk-Ebene an jede Benutzer-Schnittstelle auf der Grundlage der Zugriffs-Kontroll-Komponente liefert.

5. Übersichts-Baublock nach Anspruch 1, der weiterhin einen Netzwerklnformations-Speicher (26) zum Speichern der Übersichts-Information auf der Ressourcen-Ebene umfasst, die von der Back-End-Schnittstelle gesammelt wird.

6. Übersicht-Baublock nach Anspruch 5, bei dem der Übersicht-Baublock die Ressourcen-Ebenen-Übersichts-Information auf einer Grundlage pro Netzwerk-Element speichert.

7. Übersichts-Baublock nach Anspruch 6, bei dem der Übersichts-Baublock die von den Netzwerk-Elementen gesammelten Daten in dem Netzwerk-informations-Speicher speichert und einen Zeiger (60) von der Ansichts-Information verwendet, die Netzwerk-Elemente und Teile der Daten anzeigt, die von den Netzwerk-Elementen gesammelt werden, für die jeder Benutzer eine Zugriffsberechtigung hat, wobei der Zeiger auf seine relevanten Daten zeigt, die in dem Netzwerk-Informations-Speicher gespeichert sind.

8. Netzwerk-Management-System (2) zum Verwalten eines Netzwerkes (4) mit einer Vielzahl von Netzwerk-Elementen, wobei das Netzwerk-Management-System Folgendes umfasst:
eine oder mehrere Benutzer-Schnittstellen (15) zur Kommunikation mit Benutzern;
einen Übersichts-Baublock (10), der zwischen den Benutzer-Schnittstellen und den Netzwerk-Elementen angeordnet ist, um Daten (110, 112) von den Netzwerk-Elementen zu sammeln und um Übersichts-Information (114) auf der Netzwerk-Ebene an die Benutzer-Schnittstellen zu liefern;
**dadurch gekennzeichnet, dass**:
der Übersichts-Baublock eine Back-End-Schnittstelle (22), die Konfigurations-Information (40), wobei die Konfigurations-Information eine hierarchische Organisation der Netzwerk-Elemente ist; und Ansichts-Information (50) für jeden Benutzer speichert, wobei die Ansichts-Information Netzwerk-Elemente und Teile der Daten anzeigt, die von den Netzwerk-Elementen gesammelt wurden, für die jede der Benutzer-Schnittstellen die Berechtigung für einen Zugriff auf ihre entsprechende Konfiguration in der Konfigurations-Information hat; und die die Überblick-Information auf der Netzwerk-Ebene auf der Grundlage der von den Netzwerk-Elementen gesammelten Daten zusammenfasst; und eine Front-End-Schnittstelle (20) umfasst, die an jede Benutzer-Schnittstelle die zusammengefasste Übersichts-Information auf der Netzwerk-Ebene liefert, für die die Benutzer-Schnittstelle einen Zugriff hat.

9. Netzwerk-Verwaltungssystem nach Anspruch 8, das weiterhin ein oder mehrere Daten-Sammelblöcke (12) zum Sammeln spezifischer Arten von Daten von den Netzwerk-Elementen umfasst, und wobei der Übersicht-Baublock die spezifischen Arten von Daten von den Daten-Sammelblöcken sammelt.

10. Netzwerk-Management-System nach Anspruch 9, bei dem der Übersichts-Baublock ein Plugin-Modul (140) zur Kommunikation mit dem Daten-Sammelblock aufweist.

11. Netzwerk-Management-System nach Anspruch 10, bei dem das Plugin-Modul die Übersichts-Information auf der Netzwerk-Ebene auf der Grundlage von Daten berechnet, die von dem Daten-Sammelblock gesammelt werden.

12. Netzwerk-Management-System nach Anspruch 8, das weiterhin eine Vielzahl von Daten-Sammelblöcken (12) umfasst, wobei jeder Daten-Sammelblock zum Sammeln von Daten von einer Gruppe von Netzwerk-Elementen dient; und bei dem der Übersichts-Baublock gemeinsam genutzte Bibliotheken aufweist, die mehrere Plugin-Module (140) umfassen, wobei jedes Plugin-Modul zur Kommunikation mit seiner entsprechenden Art von Daten-Sammelblock (100) dient.

13. Netzwerk-Management-System nach Anspruch 12, bei dem der Übersichts-Baublock eine Anwendungs-Programmier-Schnittstelle (136) zur Gewinnung der Übersichts-Information auf der Netzwerk-Ebene von den Plugin-Modulen aufweist.

14. Netzwerk-Management-System nach Anspruch 12, bei dem der Übersichts-Baublock einen Netzwerk-Informations-Speicher (26) zum Speichern der von den Netzwerk-Elementen gesammelten Daten und Ansichts-Information (50) aufweist, die Netzwerk-Elemente und Teile der Daten anzeigt, die von den Netzwerk-Elementen gesammelt werden, für die jeder Benutzer eine eine Zugriffsberechtigung hat, wobei ein Zeiger (26) verwendet wird, der auf seine relevanten Daten zeigt, die in dem Netzwerk-Informations-Speicher gespeichert sind.

15. Netzwerk-Management-System nach Anspruch 8, bei dem die Netzwerk-Elemente in Domainen (120) unterteilt sind, und bei dem der Übersichts-Baublock die Übersichts-Information auf der Netzwerk-Ebene mit Information bezüglich der Domainen speichert.

16. Verfahren zur Verwaltung eines Netzwerkes (4), das eine Vielzahl von Netzwerk-Elementen (6) aufweist, wobei das Verfahren Folgendes umfasst:
Bereitstellen eines Übersichts-Baublockes (10) zwischen einer Benutzer-Schnittstelle (15) und den Netzwerk-Elementen;
Sammeln von Daten von den Netzwerk-Elementen;
**gekennzeichnet durch** die folgenden Schritte:
Zusammenfassung einer Übersichts-Information (114) auf der Netzwerk-Ebene auf der Grundlage der von den Netzwerk-Elementen gesammelten Daten (110, 112) auf der Grundlage von Ansichts-Information (50) für die Benutzer-Schnittstelle, wobei die Ansichts-Information Netzwerk-Elemente und Teile der Daten anzeigt, die von den Netzwerk-Elementen gesammelt wurden, für die die Benutzer-Schnittstelle eine Zugriffsberechtigung auf deren entsprechende Konfigurations-Information hat, wobei die Konfigurations-Information eine hierarchische Organisation der Netzwerk-Elemente ist; und
Liefern der zusammengefassten Übersichts-Information auf der Netzwerk-Ebene an die Benutzer-Schnittstelle.

17. Verfahren nach Anspruch 16, bei dem eine Teilmenge der Übersichts-Information auf der Netzwerk-Ebene, für die der Benutzer einen Zugriff hat, an die Benutzer-Schnittstelle geliefert wird.

18. Verfahren nach Anspruch 16, das weiterhin den Schritt des Speicherns von Zugriffs-Steuerinformation für die Benutzer-Schnittstelle in einem Zugangs-Kontroll-Informations-Speicher (24) umfasst.

19. Verfahren nach Anspruch 16, das weiterhin den Schritt des Speicherns der Übersichts-Information auf der Netzwerk-Ebene umfasst, die von den Netzwerk-Elementen gesammelt wird.

20. Verfahren nach Anspruch 19, bei dem das Speichern der Übersichts-Information auf der Netzwerk-Ebene auf einer Grundlage pro Netzwerk-Element erfolgt.

21. Verfahren nach Anspruch 16, das weiterhin die Schritte des Speicherns der von den Netzwerk-Elementen gesammelten Daten in dem Netzwerk-Informations-Speicher (26) und der Bereitstellung eines Zeigers (60) von der Ansichts-Information (50) umfasst, der auf die relevanten Daten zeigt, die in dem Netzwerk-Informations-Speicher gespeichert sind.

22. Verfahren nach Anspruch 16, das weiterhin den Schritt des Sammeln eines spezifischen Typs der Daten von den Netzwerk-Elementen durch einen Daten-Sammelblock (100) umfasst.

23. Verfahren nach Anspruch 22, das weiterhin den Schritt der Bereitstellung eines Plugin-Moduls (140) zur Kommunikation mit dem Daten-Sammelblock umfasst.

24. Verfahren nach Anspruch 23, das weiterhin den Schritt des Berechnens der Übersichts-Information auf der Netzwerk-Ebene auf der Grundlage von Daten umfasst, die von dem Daten-Sammelblock gesammelt werden.

25. Verfahren nach Anspruch 24, das weiterhin den Schritt der Bereitstellung mehrfacher Plugin-Module umfasst, wobei jedes Plugin-Modul zur Kommunikation mit seinem entsprechenden Daten-Sammelblock dient.

26. Verfahren nach Anspruch 25, das weiterhin den Schritt des Gewinnens der Übersichts-Information auf der Netzwerk-Ebene von den mehrfachen Plugin-Modulen umfasst.

27. Verfahren nach Anspruch 16, das weiterhin den Schritt der Unterteilung der Netzwerk-Elemente in Domainen (120) und das Speichern der Übersichts-Information auf der Netzwerk-Ebene mit Information bezüglich der Domainen umfasst.

## Revendications

1. Bloc de construction de résumé (10) destiné à être utilisé dans un système de gestion de réseau (2) pour gérer un réseau (4) ayant de multiples éléments de réseau (6), le système de gestion de réseau ayant une ou plusieurs interfaces d'utilisateur (15) pour une communication avec un ou plusieurs utilisateurs, le bloc de construction de résumé comprenant : une interface d'extrémité arrière (22) pour collecter des données (110, 112) à partir des éléments de réseau ; et une interface d'extrémité avant (20) pour fournir des informations de résumé de niveau de réseau (114) aux interfaces d'utilisateur sur la base des données collectées par l'interface d'extrémité arrière;
**caractérisé en ce que** :
le bloc de construction de résumé stocke des informations de topologie (40), les informations de topologie étant une organisation hiérarchique des éléments de réseau ; et des informations de vue (50) pour chaque utilisateur, les informations de vue indiquant des éléments de réseau et des parties des données collectées à partir des éléments de réseau auquel chaque utilisateur a une permission d'accéder à sa topologie correspondante dans les informations de topologie ;
l'interface d'extrémité arrière résume les informations de résumé de niveau de réseau sur la base des données collectées à partir des éléments de réseau et des informations de vue, et
l'interface d'extrémité avant fournit à chaque interface d'utilisateur les informations de résumé de niveau de réseau résumées auxquelles l'interface d'utilisateur a la permission d'accéder.

2. Bloc de construction de résumé selon la revendication 1, dans lequel l'interface d'extrémité arrière a un mécanisme enfichable utilisant des bibliothèques partagées chargées dynamiquement (130) pour charger et exécuter des modules enfichables (140) pour obtenir les informations de résumé de niveau de réseau.

3. Bloc de construction de résumé selon la revendication 2, dans lequel les informations de vue sont mises à jour par les modules enfichables lors d'une modification des informations de topologie.

4. Bloc de construction de résumé selon la revendication 1, comprenant en outre un composant de commande d'accès (28) pour commander chaque accès d'utilisateur aux informations de résumé de niveau de réseau, dans lequel l'interface d'extrémité avant fournit les informations de résumé des niveaux de réseau à chaque interface d'utilisateur sur la base du composant de commande d'accès.

5. Bloc de construction de résumé selon la revendication 1, comprenant en outre un stockage d'informations de réseau (26) pour stocker les informations de résumé de niveau de ressource collectées par l'interface d'extrémité arrière.

6. Bloc de construction de résumé selon la revendication 5, dans lequel le bloc de construction de résumé stocke les informations de résumé de niveau de ressource sur une base d'élément par réseau.

7. Bloc de construction de résumé selon la revendication 6, dans lequel le bloc de construction de résumé stocke les données collectées à partir des éléments de réseau dans le stockage d'informations de réseau, et utilise un pointeur (60) à partir des informations de vue indiquant des éléments de réseau et des parties des données collectées à partir des éléments de réseau auxquelles chaque utilisateur a une permission d'accéder, le pointeur pointe à ses données associées stockées dans le stockage d'informations de réseau.

8. Système de gestion de réseau (2) pour gérer un réseau (4) ayant de multiples éléments de réseau (6), le système de gestion de réseau comprenant :
une ou plusieurs interfaces d'utilisateur (15) pour une communication avec des utilisateurs ;
un bloc de construction de résumé (10) placé entre les interfaces d'utilisateur et les éléments de réseau pour collecter des données (110, 112) à partir des éléments de réseau, et pour fournir des informations de résumé de niveau de réseau (114) aux interfaces d'utilisateur ;
**caractérisé en ce que**
le bloc de construction de résumé comprend une interface d'extrémité arrière (22) stockant des informations de topologie (40), les informations de topologie étant une organisation hiérarchique des éléments de réseau; et des informations de vue (50) pour chaque utilisateur, les informations de vue indiquant des éléments de réseau et des parties des données collectées à partir des éléments de réseau auxquelles chacune des interfaces d'utilisateur a une permission d'accéder à sa topologie correspondante dans les informations de topologie; et résumer les informations de résumé de niveau de réseau sur la base des données collectées à partir des éléments de réseau; et une interface d'extrémité avant (20) fournissant à chaque interface d'utilisateur des informations de résumé de niveau de réseau résumées auxquelles l'interface d'utilisateur a accès.

9. Système de gestion de réseau selon la revendication 8, comprenant en outre un ou plusieurs blocs de collecte de données (12) pour collecter des types spécifiques de données à partir des éléments de réseau, et le bloc de construction de résumé collecte les types spécifiques de données à partir des blocs de collecte de données.

10. Système de gestion de réseau selon la revendication 9, dans lequel le bloc de construction de résumé a un module enfichable (140) pour communiquer avec le bloc de collecte de données.

11. Système de gestion de réseau selon la revendication 10, dans lequel le module enfichable calcule les informations de résumé de niveau de réseau sur la base des données collectées à partir du bloc de collecte de données.

12. Système de gestion de réseau selon la revendication 8, comprenant en outre une pluralité de blocs de collecte de données (12), chaque bloc de collecte de données pour collecter des données à partir d'un groupe d'éléments de réseau; et dans lequel le bloc de construction de résumé a des bibliothèques partagées comprenant de multiples modules enfichables (140), chaque module enfichable pour communiquer avec son type correspondant de bloc de collecte de données (100).

13. Système de gestion de réseau selon la revendication 12, dans lequel le bloc de construction de résumé a une interface de programmation d'application (136) pour obtenir les informations de résumé de niveau de réseau à partir des modules enfichables.

14. Système de gestion de réseau selon la revendication 12, dans lequel le bloc de construction de résumé a un stockage d'informations de réseau (26) pour stocker les données collectées à partir des éléments de réseau et des informations de vue (50) indiquant les éléments de réseau et les parties des données collectées à partir des éléments de réseau auxquelles chaque utilisateur a la permission d'accéder, en utilisant un pointeur (26) pointant ces données concernées stockées dans le stockage d'informations de réseau.

15. Système de gestion de réseau selon la revendication 8, dans lequel les éléments de réseau sont divisés en domaines (120), le bloc de construction de résumé stocke les informations de résumé de niveau de réseau avec les informations concernant les domaines.

16. Procédé pour gérer un réseau (4) ayant de multiples éléments de réseau (6), le procédé comprenant :
la fourniture d'un bloc de construction de résumé (10) entre une interface d'utilisateur (15) et les éléments de réseau ;
la collecte des données à partir des éléments de réseau ;
**caractérisé par**
le résumé des informations de résumé de niveau de réseau (114) sur la base des données (110, 112) collectées à partir des éléments de réseau sur la base des informations de vue (50) pour l'interface d'utilisateur, les informations de vue indiquant les éléments de réseau et les parties de données collectées à partir des éléments de réseau auxquels l'interface d'utilisateur a la permission d'accéder à ses informations de topologie correspondantes, les informations de topologie étant une organisation hiérarchique des éléments de réseau ; et
la fourniture aux interfaces d'utilisateur des informations de résumé de niveau de réseau résumées.

17. Procédé selon la revendication 16, dans lequel un sous-ensemble d'informations de résumé de niveau de réseau pour lequel l'utilisateur a accès est fourni à l'interface d'utilisateur.

18. Procédé selon la revendication 16, comprenant en outre l'étape de stockage des informations de commande d'accès pour l'interface d'utilisateur dans le stockage d'informations de commande d'accès (24).

19. Procédé selon la revendication 16, comprenant en outre l'étape de stockage des informations de résumé de niveau de réseau collectées par les éléments de réseau.

20. Procédé selon la revendication 19, dans lequel le stockage des informations de résumé de niveau est stocké sur une base d'élément par réseau.

21. Procédé selon la revendication 16, comprenant en outre des étapes de stockage des données collectées à partir des éléments de réseau dans le stockage d'informations de réseau (26), et fournissant un pointeur (60) à partir des informations de vue (50) pointant vers les données concernées stockées dans le stockage des informations de réseau.

22. Procédé selon la revendication 16, comprenant en outre les étapes de collecte d'un type spécifique de données à partir des éléments de réseau par un bloc de collecte de données (100).

23. Procédé selon la revendication 22, comprenant en outre les étapes de fourniture d'un module enfichable (140) pour communiquer avec les blocs de collecte de données.

24. Procédé selon la revendication 23, comprenant en outre l'étape de calcul d'informations de résumé de niveau de réseau sur la base des données collectées à partir du bloc de collecte de données.

25. Procédé selon la revendication 24, comprenant en outre l'étape de fourniture de multiples modules enfichable, chaque module enfichable pour communiquer avec son bloc de collecte de données correspondant.

26. Procédé selon la revendication 25, comprenant en outre l'étape d'obtention des informations de résumé de niveau de réseau à partir de multiples modules enfichables.

27. Procédé selon la revendication 16, comprenant en outre l'étape de diviser les éléments de réseau en domaines (120), et de stocker des informations de résumé de niveau de réseau avec des informations concernant les domaines.
